# EUROPÄISCHE PATENTSCHRIFT

(11) **EP 2 116 759 B1**
(45) Veröffentlichungstag und Bekanntmachung des Hinweises auf die Patenterteilung: **20.02.2013**
(21) Anmeldenummer: 09159661.9
(22) Anmeldetag: 07.05.2009
(51) Int. Cl.: F21S 4/00, G02B 6/00

(54) **Leuchte mit mehreren punktförmigen Lichtquellen und mehreren Lichtlenkelementen**
Light with several punctiform light sources and several light link elements
Lampe dotée de plusieurs sources de lumière en forme de points et de plusieurs éléments de guidage de lumière

(30) Priorität: 09.05.2008 DE 102008022962
(43) Veröffentlichungstag der Anmeldung: 11.11.2009
(73) Patentinhaber: Zumtobel Lighting GmbH, 6850 Dornbirn (AT)
(72) Erfinder: Kenneth, Martin, 6850, Dornbirn (AT)
(74) Vertreter: Thun, Clemens

(56) Entgegenhaltungen:
- EP-A- 2 037 301
- DE-A1- 19 853 956
- US-A1- 2005 168 967

## Beschreibung

Gegenstand der vorliegenden Erfindung ist eine Leuchte, die ein Leuchtengehäuse mit einer Lichtaustrittsöffnung, mehrere im Wesentlichen punktförmige Lichtquellen, insbesondere Leuchtdioden (LED), und mehrere den Lichtquellen zugeordnete Lichtlenkelemente, mit einer den Lichtquellen zugewandten Lichteinkopplungsseite und einer der Lichtaustrittsöffnung zugewandten Lichtabgabeseite, aufweist, wobei die Lichtquellen senkrecht zur Lichtaustrittsöffnung im Bereich der Seitenwände des Profilrahmens angeordnet sind.

Bei Leuchten, die Leuchtdioden als Lichtquellen verwenden, besteht oft das Problem eines schlechten Wärmeübergangs von der LED zu einem wärmeabführenden Gehäuse. Üblicherweise sind bei einer solchen Leuchte die LEDs auf einem Steg, der zwischen den Gehäusewänden verläuft, angebracht. Dementsprechend sind die LEDs parallel zur Lichtaustrittsfläche der Leuchte angeordnet. Da in der unmittelbaren Nähe häufig weitere Bauteile, wie beispielsweise Konverter, angebracht werden müssen, ist nur wenig Raum für einen Kühlkörper vorhanden.

Grundsätzlich besteht die Möglichkeit ein Lichtlenkelement zu verwenden, um die Leuchtdioden nicht unmittelbar vor einem Lichtaustrittselement anordnen zu müssen. Es sind beispielsweise Leuchten bekannt, bei denen das von LEDs erzeugte Licht zunächst in ein Lichtlenkelement eingekoppelt wird. Eine derartige Leuchte ist bspw. in der DE 198 53 956 A1 gezeigt, wobei in dieser allerdings längliche Lichtquellen zum Einsatz kommen. Alternativ könnte das Licht auch zunächst auf einen Reflektor gerichtet werden, der es in die gewünschte Richtung zurück reflektiert.

Wird nur ein einziges Lichtlenkelement verwendet, so ist die Leuchte jedoch sehr unflexibel und das Lichtbild der Leuchte wird möglicherweise durch dieses Lichtlenkelement eingeschränkt. Aus der DE 10 2004 063 574 A1 ist des Weiteren eine Leuchte bekannt, bei der jeder LED ein eigenes Lichtlenkelement zugeordnet wird. Die LEDs sind bei dieser Leuchte auf einer Platte angeordnet. Eine ähnliche Leuchte zeigt auch die US 2005/0168967 A1, in der LEDs an der Rückwand der Leuchte angeordnet sind und den LEDs mehrere Lichtlenkelemente zugeordnet sind.

Aufgabe der vorliegenden Erfindung ist es nunmehr, eine Leuchte bereitzustellen, die eine gute Kühlung bei der Verwendung von punktförmigen Lichtquellen, insbesondere LEDs, ermöglicht.

Diese Aufgabe wird durch eine Leuchte gemäß dem vorliegenden Anspruch 1 gelöst. Vorteilhafte Weiterbildungen und bevorzuge Ausführungsbeispiele sind Gegenstand der abhängigen Ansprüche.

Erfindungsgemäß wird dementsprechend eine Leuchte vorgeschlagen, die ein Leuchtengehäuse mit einer Lichtaustrittsöffnung, mehrere im Wesentlichen punktförmige Lichtquellen, insbesondere Leuchtdioden, und mehrere den Lichtquellen zugeordnete Lichtlenkelemente, mit einer den Lichtquellen zugewandten Lichteinkopplungsseite und einer der Lichtaustrittsöffnung zugewandten Lichtabgabeseite, aufweist, wobei die Lichtquellen senkrecht zur Lichtaustrittsöffnung im Bereich der Seitenwände des Profilrahmens angeordnet sind. Des Weiteren weist die Leuchte Kühlelemente zur Kühlung der Lichtquellen auf und die Lichtlenkelemente weisen eine Lichtlenkseite auf, wobei die Lichtlenkseite die Lichteinkopplungsseite und die Lichtabgabeseite miteinander verbindet.

Vorzugsweise sind die Lichtquellen versetzt zueinander angeordnet. Dementsprechend sind auch die Lichtlenkelemente derart angeordnet, dass die Lichteinkopplungsseiten zweier benachbarter Lichtlenkelemente zu entgegengesetzten Seitenwänden des Gehäuses ausgerichtet sind. Diese alternierende Anordnung der Lichtquellen und Lichtlenkelemente ermöglicht eine sehr gut Kühlung, da viel Raum für einen Kühlkörper zur Verfügung steht und es nicht zu einer sehr starken Hitzeproduktion an einem einzigen Punkt kommt.

In einem bevorzugten Ausführungsbeispiel ist jeder Lichtquelle genau ein Lichtlenkelement zugeordnet. Alternativ können einem Lichtlenkelement aber auch mehr als eine Lichtquelle zugeordnet werden.

Die Lichtlenkseite kann vorzugsweise gekrümmt, abgestuft oder gerade ausgestaltet sein. Es ergibt sich somit im Wesentlichen eine Dreiecksform für das Lichtlenkelement.

In einem weiteren bevorzugten Ausführungsbeispiel ist die Lichtlenkseite reflektierend.

Ferner weisen die Lichtlenkelemente vorzugsweise an der Lichteinkopplungsseite eine Ausnehmung auf, in die jeweils eine Leuchtdiode hineinragt, wobei der umgebende Bereich der Ausnehmung reflektierend ausgestaltet ist.

Die Lichtabgabeseite kann in einem bevorzugten Ausführungsbeispiel bombiert sein und von der Lichteinkopplungsseite weg eine Verdickung aufweisen. Beides trägt zur Entblendung des abgestrahlten Lichts bei.

Vorzugsweise wird das Lichtlenkelement aus Vollmaterial, insbesondere Kunststoff, hergestellt. Alternativ kann es sich allerdings auch um einen Hohlkörper handeln.

Nachfolgend soll die Erfindung anhand der beiliegenden Zeichnung näher erläutert werden. Es zeigen:
- Fig. 1: eine erfindungsgemäße Leuchte in perspektivischer Darstellung;
- Fig. 2: ein Lichtlenkelement in perspektivischer Darstellung;
- Fig. 3: einen Querschnitt durch die erfindungsgemäße Leuchte; und
- Fig. 4: eine Ansicht der erfindungsgemäßen Leuchte von unten.

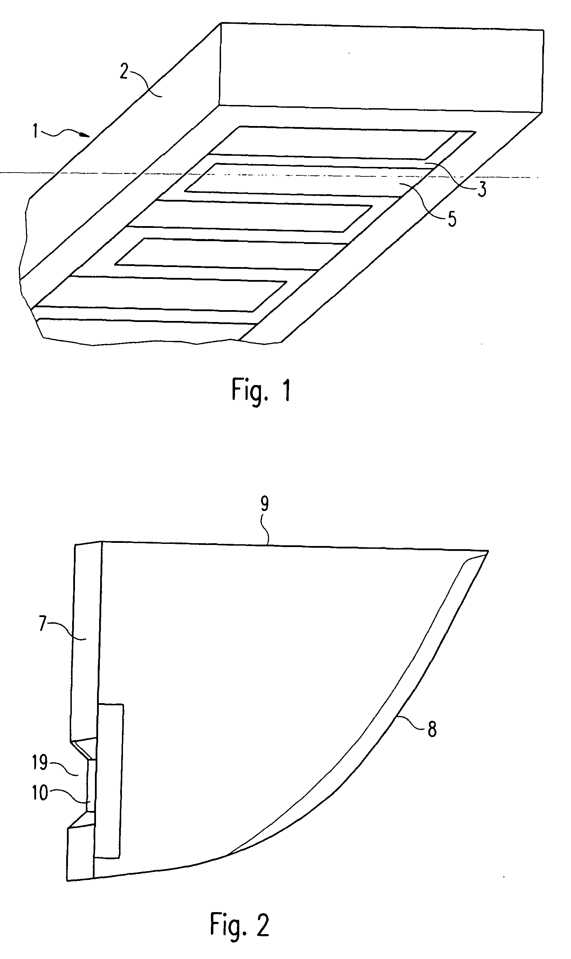

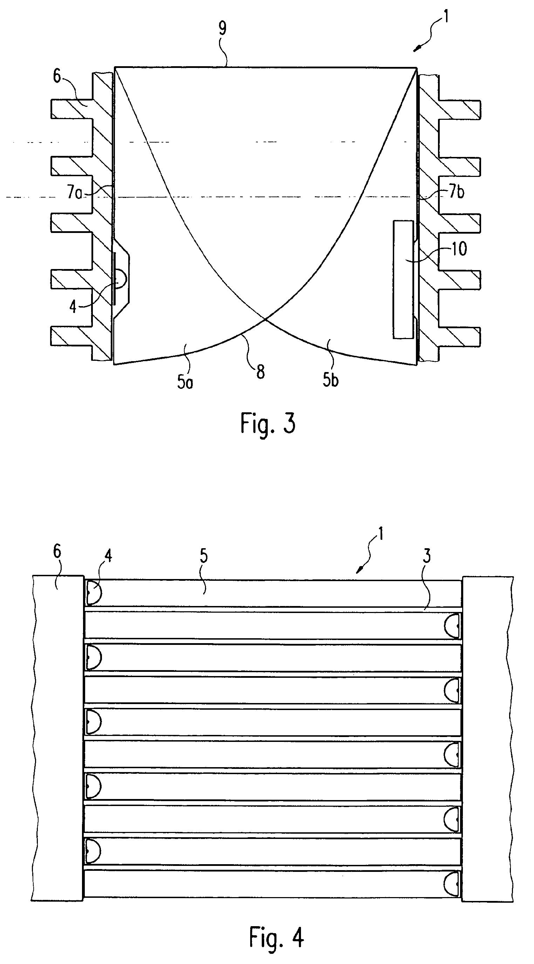

Fig. 1 zeigt einen Ausschnitt einer erfindungsgemäßen Leuchte 1 und Fig. 4 zeigt eine Ansicht der erfindungsgemäßen Leuchte 1 von unten. Die Leuchte 1 weist ein Gehäuse 2 mit einer Lichtaustrittsöffnung 3 auf. Im Bereich der Innenseiten des Gehäuses 2 sind im Wesentlichen punktförmige Lichtquellen 4 angeordnet, die in Fig. 1 nicht dargestellt sind. Bei diesen Lichtquellen 4 handelt es sich vorzugsweise um Leuchtdioden (LED). In der Lichtaustrittsöffnung 3 sind mehrere Lichtlenkelemente 5 angeordnet, die im Folgenden genauer erläutert werden.

Bei der erfindungsgemäßen Leuchte 1 sind die Lichtquellen 4 nicht unmittelbar vor der Lichtaustrittsöffnung 3 angeordnet. Daher werden mehrere Lichtlenkelemente 5 verwendet, welche das von den Lichtquellen 4 erzeugte Licht zur Lichtaustrittsöffnung 3 umlenken. Fig. 2 zeigt ein solches Lichtlenkelement 5.

Das Lichtlenkelement 5 kann entweder aus Vollmaterial, insbesondere aus Kunststoff, hergestellt werden, oder es kann sich um einen Hohlkörper handeln.

Das Lichtlenkelement 5 weist eine Lichteinkopplungsseite 7, eine Lichtlenkseite 8 und eine Lichtabgabeseite 9 auf. Die Lichteinkopplungsseite 7 weist eine konische Ausnehmung 19 auf. Wird das Lichtlenkelement 5 in die erfindungsgemäße Leuchte 1 eingesetzt, so ragt eine Lichtquelle 4 in diese Ausnehmung 19 herein. An dem Bereich 10, der diese Ausnehmung 19 unmittelbar umgibt ist eine reflektierend Beschichtung aufgebracht oder aufgeklebt. Auf diese Weise wird vermieden, dass Lichtstrahlen, die unter einem sehr großen Winkel in das Lichtlenkelement 5 eingekoppelt werden, aus diesem wieder an der Lichteinkopplungsseite 7 heraustreten.

Die Lichtlenkseite 8 verbindet die Lichteinkopplungsseite 7 mit der Lichtabgabeseite 9. In dem in Fig. 2 gezeigten Ausführungsbeispiel ist die Lichtlenkseite 8 gebogen geformt. Es sind darüber hinaus auch andere Formen, wie etwa abgewinkelt, stufenförmig oder gerade, denkbar, so dass sich im Wesentlichen eine Dreiecksform ergibt. Die Lichtlenkseite 8 bewirkt ebenso wie die Flachseite eine Totalreflexion des Lichts, das durch die Ausnehmung 10 der Lichteinkopplungsseite 7 eingekoppelt wird. Alternativ kann die Lichtlenkseite 8 allerdings auch verspiegelt oder als Frenelllinse ausgebildet sein.

Die Lichtabgabeseite 9 kann bombiert sein, um die Lichtabgabe in gewünschter Weise, insbesondere in Längsrichtung der Leuchte zu beeinflussen. Hierdurch kann erzielt werden, dass das Licht lediglich in einen bestimmten Winkelbereich abgegeben, also entblendet, wird. Eine Entblendung ist insbesondere beim Einsatz der Leuchte 1 in Büroräumen vorteilhaft, da es sonst zu unerwünschten Reflexionen an senkrecht stehenden Bildschirmen kommt. Eine Entblendung könnte auch dadurch erreicht werden, dass die Lichtaustrittsfläche 8 mit Mikroprismen ausgebildet wird, welche das Licht entblenden.

Des Weiteren können die beiden Flachseiten des Lichtlenkelements 5 in einem gewissen Winkel zueinander verlaufen. Sie müssen also nicht zwangsläufig parallel ausgerichtet sein. Durch eine leichte Verbreiterung der Lichtaustrittsfläche 9 weg von der Lichteinkopplungsseite 7 kann die entblendende Wirkung zusätzlich verbessert werden.

Fig. 3 zeigt nunmehr einen Querschnitt durch eine erfindungsgemäße Leuchte 1. Jeder Leuchtdiode 4 ist genau ein Lichtlenkelement 5 zugeordnet, wobei die Leuchtedioden 4 senkrecht zur Lichtaustrittsöffnung 3 im Bereich der Seitenwände des Gehäuses 2 angeordnet sind. In Fig. 3 sind zwei Lichtlenkelemente 5a und 5b zu erkennen, wobei das Lichtlenkelement 5a weiter vorne angeordnet ist.

Die Leuchtdioden 4 sind versetzt zueinander angeordnet, wobei auch jeweils eine abwechselnde Ausrichtung der Lichtlenkelemente 5 erforderlich ist. In Fig. 4 ist die alternierende Anordnung der Leuchtdioden 4 ebenfalls deutlich zu erkennen. Entsprechend dieser Anordnung sind die Lichtlenkelemente 5 derart angeordnet, dass die Lichteinkopplungsseiten 7a, 7b zweier benachbarter Lichtlenkelemente 5a, 5b zu entgegengesetzten Seitenwänden des Gehäuses 2 ausgerichtet sind. In Fig. 3 liegt die Lichteinkopplungsseite 7a das vorderen Lichtlenkelements 5a an der linken Seitenwand an, während die Lichteinkopplungsseite 7b des zweiten Lichtlenkelements 5b an der rechten Seitenwand anliegt. Diese alternierende Anordnung der Lichtlenkelemente 5 hat zur Folge, dass eine große Anzahl von Leuchtdioden 4 in der Leuchte 1 angeordnet werden kann, ohne dass hierbei Schwierigkeiten bei der Ankopplung der Leuchtdioden 4 an das Gehäuse 2 auftreten bzw. die Wärmeentwicklung punktuell zu groß ist.

Das Lichtlenkelement 5 ist recht dünn ausgestaltet, so dass die Abstände zwischen den einzelnen Lichtquellen 4 gering sind. Diese kleinsten Abstände zwischen den Lichtquellen 4 sind insbesondere bei Farbmischleuchten relevant, da sich nur in diesem Fall das Licht der einzelnen Lichtquellen 4 effektiv miteinander vermischt.

Das Bezugszeichen 6 bezeichnet hier Kühlelemente, welche die von den Lichtquellen 4 erzeugte Wärme abtransportieren. Bei den hier gezeigten Kühlelementen 6 handelt es sich um Kühllamellen, welche eine sehr große Oberfläche aufweisen. Dadurch steht eine große Fläche zum Austausch der Hitze im Innern des Gehäuses mit der vergleichsweise kühlen Außenluft bereit. Insgesamt zeichnet sich die erfindungsgemäße Leuchte 1 dadurch aus, dass aufgrund der Anordnung der Lichtquellen 4 viel Raum für große Kühlelemente 6 zur Verfügung steht.

## Patentansprüche

1. Leuchte (1) aufweisend
ein Leuchtengehäuse (2) mit einer Lichtaustrittsöffnung (3), mehrere im Wesentlichen punktförmige Lichtquellen (4), insbesondere Leuchtdioden (4), die senkrecht zur Lichtaustrittsöffnung (3) angeordnet sind, und
mehrere den Lichtquellen (4) zugeordnete Lichtlenkelemente (5), mit einer den Lichtquellen (4) zugewandten Lichteinkopplungsseite (7) und einer der Lichtaustrittsöffnung (3) zugewandten Lichtabgabeseite (9),
**dadurch gekennzeichnet, dass** die Lichtzuellen (4) im Bereich der Seitenwände des Leuchtengehäuses (2) angeordnet sind, und,
dass die Leuchte (1) ferner Kühlelemente (6) zur Kühlung der Lichtquellen (4) aufweist und dass die Lichtlenkelemente (5) ferner eine Lichtlenkseite (8) aufweisen, wobei die Lichtlenkseite (8) die Lichteinkopplungsseite (7) und die Lichtabgabeseite (9) miteinander verbindet.

2. Leuchte (1) nach Anspruch 1,
**dadurch gekennzeichnet,**
**dass** die Lichtquellen (4) versetzt zueinander angeordnet sind.

3. Leuchte (1) nach einem der vorherigen Ansprüche,
**dadurch gekennzeichnet,**
**dass** die Lichtlenkelemente (5) derart angeordnet sind, dass die Lichteinkopplungsseiten (7) zweier benachbarter Lichtlenkelemente (5) zu entgegengesetzten Seitenwänden des Gehäuses (2) ausgerichtet sind.

4. Leuchte (1) nach einem der vorherigen Ansprüche,
**dadurch gekennzeichnet,**
**dass** jeder Lichtquelle (4) genau ein Lichtlenkelement (5) zugeordnet ist.

5. Leuchte (1) nach einem der vorherigen Ansprüche,
**dadurch gekennzeichnet,**
**dass** die Lichtlenkseite (8) gekrümmt, abgestuft oder gerade ausgestaltet ist.

6. Leuchte (1) nach einem der vorherigen Ansprüche,
**dadurch gekennzeichnet,**
**dass** die Lichtlenkseite (8) reflektierend ist.

7. Leuchte (1) nach einem der vorherigen Ansprüche,
**dadurch gekennzeichnet,**
**dass** die Lichtlenkelemente (5) an der Lichteinkopplungsseite (7) eine Ausnehmung (10) aufweisen, in die jeweils eine Lichtquelle (4) hineinragt.

8. Leuchte (1) nach Anspruch 7,
**dadurch gekennzeichnet,**
**dass** der umgebende Bereich der Ausnehmung (10) reflektierend ausgestaltet ist.

9. Leuchte (1) nach einem der vorherigen Ansprüche,
**dadurch gekennzeichnet,**
**dass** die Lichtabgabeseite (9) bombiert ist.

10. Leuchte (1) nach einem der vorherigen Ansprüche,
**dadurch gekennzeichnet,**
**dass** die Lichtabgabeseite (9) von der Lichteinkopplungsseite (7) weg eine Verdickung aufweist.

11. Leuchte (1) nach einem der vorherigen Ansprüche,
**dadurch gekennzeichnet,**
**dass** das Lichtlenkelement (5) aus Vollmaterial, insbesondere aus Kunststoff, hergestellt wird.

12. Leuchte (1) nach einem der Ansprüche 1 bis 10,
**dadurch gekennzeichnet,**
**dass** es sich bei dem Lichtlenkelement (5) um einen Hohlkörper handelt.

## Claims

1. A luminaire (1) having
a luminaire housing (2) with a light-exit opening (3),
a plurality of substantially punctiform light sources (4), in particular light-emitting diodes (4), which are arranged perpendicularly to the light-exit opening (3), and
a plurality of light-directing elements (5) associated with the light sources (4), with a light-input side (7) facing the light sources (4) and a light-output side (9) facing the light-exit opening (3),
**characterised in that**
the light sources (4) are arranged in the region of the side walls of the luminaire housing (2), and
the luminaire (1) has, furthermore, cooling elements (6) for cooling the light sources (4), and the light-directing elements (5) have, furthermore, a light-directing side (8), wherein the light-directing side (8) connects the light-input side (7) and the light-output side (9) together.

2. A luminaire (1) according to claim 1,
**characterised in that**
the light sources (4) are arranged so as to be offset in relation to each other.

3. A luminaire (1) according to one of the previous claims
**characterised in that**
the light-directing elements (5) are arranged in such a way that the light-input sides (7) of two adjacent light-directing elements (5) are directed to opposing side walls of the housing (2).

4. A luminaire (1) according to one of the previous claims,
**characterised in that**
precisely one light-directing element (5) is associated with each light source (4).

5. A luminaire (1) according to one of the previous claims,
**characterised in that**
the light-directing side (8) is configured so as to be curved, stepped or straight.

6. A luminaire (1) according to one of the previous claims,
**characterised in that**
the light-directing side (8) is reflective.

7. A luminaire (1) according to one of the previous claims,
**characterised in that**
the light-directing elements (5) have on the light-input side (7) a recess (10) into which a respective light source (4) projects.

8. A luminaire (1) according to claim 7,
**characterised in that**
the surrounding region of the recess (10) is configured in a reflective manner.

9. A luminaire (1) according to one of the previous claims,
**characterised in that**
the light-output side (9) is bomb-shaped.

10. A luminaire (1) according to one of the previous claims,
**characterised in that**
the light-output side (9) has a thickened portion away from the light-input side (7).

11. A luminaire (1) according to one of the previous claims,
**characterised in that**
the light-directing element (5) is produced from solid material, in particular from plastics material.

12. A luminaire (1) according to one of claims 1 to 10,
**characterised in that**
the light-directing element (5) is a hollow body.

## Revendications

1. Lampe (1) présentant
un boîtier de lampe (2) doté d'une ouverture de sortie de lumière (3),
plusieurs sources de lumière (4) essentiellement en forme de points, en particulier des diodes électroluminescentes (4), qui sont disposées de manière perpendiculaire par rapport à l'ouverture de sortie de lumière (3), et
plusieurs éléments de guidage de lumière (5) associés aux sources de lumière (4) dotés d'un côté d'injection de lumière (7) tourné vers les sources de lumière (4) et d'un côté d'émission de lumière (9) tourné vers l'ouverture de sortie de lumière (3),
**caractérisée en ce**
**que** les sources de lumière (4) sont disposées dans la zone des parois latérales du boîtier de lampe (2), et
en ce que la lampe (1) présente en outre des éléments de refroidissement (6) servant à refroidir les sources de lumière (4), et en ce que les éléments de guidage de lumière (5) présentent en outre un côté de guidage de lumière (8), sachant que le côté de guidage de lumière (8) relie le côté d'injection de lumière (7) et le côté d'émission de lumière (9) l'un à l'autre.

2. Lampe (1) selon la revendication 1,
**caractérisée en ce**
**que** les sources de lumière (4) sont disposées de manière décalée les unes par rapport aux autres.

3. Lampe (1) selon l'une quelconque des revendications précédentes,
**caractérisée en ce**
**que** les éléments de guidage de lumière (5) sont disposés de telle manière que les côtés d'injection de lumière (7) des deux éléments de guidage de lumière (5) adjacents sont orientés en direction des parois latérales opposées du boîtier (2).

4. Lampe (1) selon l'une quelconque des revendications précédentes,
**caractérisée en ce**
**que** précisément un élément de guidage de lumière (5) est associé à chaque source de lumière (4).

5. Lampe (1) selon l'une quelconque des revendications précédentes,
**caractérisée en ce**
**que** le côté de guidage de lumière (8) est configuré de manière courbée, étagée ou de manière rectiligne.

6. Lampe (1) selon l'une quelconque des revendications précédentes,
**caractérisée en ce**
**que** le côté de guidage de lumière (8) est réfléchissant.

7. Lampe (1) selon l'une quelconque des revendications précédentes,
**caractérisée en ce**
**que** les éléments de guidage de lumière (5) présentent au niveau du côté d'injection de lumière (7) un évidement (10) dans lequel respectivement une source de lumière (4) fait saillie.

8. Lampe (1) selon la revendication 7,
**caractérisée en ce**
**que** la zone environnante de l'évidement (10) est configurée de manière à être réfléchissante.

9. Lampe (1) selon l'une quelconque des revendications précédentes,
**caractérisée en ce**
**que** le côté d'émission de lumière (9) est bombé.

10. Lampe (1) selon l'une quelconque des revendications précédentes,
**caractérisée en ce**
**que** le côté d'émission de lumière (9) présente de manière éloignée du côté d'injection de lumière (7) un épaississement.

11. Lampe (1) selon l'une quelconque des revendications précédentes,
**caractérisée en ce**
**que** l'élément de guidage de lumière (5) est fabriqué à partir d'un matériau plein, en particulier à partir de matière plastique.

12. Lampe (1) selon l'une quelconque des revendications 1 à 10,
**caractérisée en ce**
**qu'**il s'agit dans le cas de l'élément de guidage de lumière (5) d'un corps creux.
